# EUROPEAN PATENT SPECIFICATION

(11) **EP 3 366 564 B1**
(45) Date of publication and mention of the grant of the patent: **15.07.2020**
(21) Application number: 18151796.2
(22) Date of filing: 16.01.2018
(51) Int. Cl.: B62L 3/02, B60T 8/36, B62K 19/38

(54) **STRADDLED VEHICLE**
GRÄTSCHSITZFAHRZEUG
VÉHICULE À ENFOURCHER

(30) Priority: 28.02.2017 JP 2017036624; 07.03.2017 JP 2017043078
(43) Date of publication of application: 29.08.2018
(73) Proprietor: Yamaha Hatsudoki Kabushiki Kaisha, Iwata-shi Shizuoka 438-8501 (JP)
(72) Inventor: GOKE, Takayuki, Iwata-shi, Shizuoka 438-8501 (JP)
(74) Representative: Grünecker Patent- und Rechtsanwälte PartG mbB

(56) References cited:
- EP-A1- 2 540 587
- JP-A- H10 181 546
- JP-B2- 5 751 989

## Description

### BACKGROUND OF THE INVENTION

### Field of the Invention

The present invention relates to a straddled vehicle including an ABS.

### Description of Related Art

An ABS (Antilock Brake System) may be included in a motorcycle. The ABS is mainly constituted by a master cylinder, a caliper and a hydraulic unit.

In the motorcycle described in JP 2005-178632 A, an ABS unit (hydraulic unit) is provided rearwardly of a head pipe. Specifically, this ABS unit is arranged between a pair of left and right upper pipes extending rearwardly from upper portions of the head pipe, and a pair of left and right lower pipes extending rearwardly from lower portions of the head pipe. The pair of upper pipes and the pair of lower pipes constitute part of a body frame. A front cowl is provided forwardly of the head pipe, and a headlamp is provided at a front end of the front cowl. The headlamp, the head pipe and the ABS unit are arranged in a front-and-rear direction. Further prior art is known from
document EP 2 540 587 A1, which discloses a straddled vehicle comprising: a head pipe; a front fork rotatably provided at the head pipe; a handle configured to be rotated together with the front fork; a master cylinder attached to the handle; a caliper provided at the front fork; a front cover that has a front surface portion arranged forwardly of the head pipe in a vehicle front-and-rear direction (L); a headlamp that has a light emission surface exposed from the front surface portion; and a hydraulic unit arranged between the head pipe and the front surface portion in the side view of the vehicle, wherein the hydraulic unit is located at a position farther downward than the headlamp and farther upward than an under bracket of the front fork, the hydraulic unit at least partially overlaps with the headlamp in a plan view of the vehicle, the hydraulic unit at least partially overlaps with the head pipe in a front view of the vehicle, the master cylinder and the hydraulic unit are connected to each other via an upper pipe, and the hydraulic unit and the caliper are connected to each other via a lower pipe, the upper pipe includes a first rubber hose, the lower pipe includes a steel pipe and a second rubber hose connected to each other with use of a connector, an end of the steel pipe of the lower pipe is connected to the hydraulic unit, an end of the second rubber hose of the lower pipe is connected to the caliper, the connector is at least partially located at a position farther downward than a center of the headlamp in a vehicle top-and-bottom direction.

### BRIEF SUMMARY OF THE INVENTION

In a small-size motorcycle having small engine displacement, only one down frame is sometimes joined to a head pipe instead of a pair of upper pipes and a pair of lower pipes being joined to the head pipe. In such constitution, a space in which appliances can be stored is not formed rearwardly of the head pipe. Therefore, in order to arrange an ABS unit rearwardly of the head pipe in the small-size motorcycle, it is necessary to provide a space for the ABS unit rearwardly of the down frame. Thus, a size of a front portion of the vehicle including a headlamp, the head pipe and the ABS unit is increased in the front-and-rear direction.

Then, it is considered that a hydraulic unit is arranged leftwardly or rightwardly of a head pipe or a headlamp in order to realize a reduction in size of a front portion of a vehicle In the front-and-rear direction in the straddled vehicle including an ABS.

In the ABS, brake liquid pipes are provided respectively between a master cylinder and the hydraulic unit and between the hydraulic unit and a caliper. In the case where the hydraulic unit is fixed to the head pipe, the master cylinder and the caliper are rotated relative to the hydraulic unit during an operation of a handle by a rider. Therefore, rubber hoses having flexibility are used for the brake liquid pipes.

When the hydraulic unit is arranged leftwardly or rightwardly of the head pipe or the headlamp, an amount of bending of each brake rubber hose required during the operation of the handle by the rider is increased. Therefore, it is necessary to largely ensure a space for allowing bending of each brake rubber hose in the front portion of the vehicle. Thus, whether the hydraulic unit is provided leftwardly or rightwardly of the head pipe or the headlamp, it is difficult to actually reduce the size of the front portion of the vehicle.

An object of the present invention is to provide a straddled vehicle in which an ABS is included and a size of a front portion of the vehicle can be reduced in a front-and-rear direction.
(1) A straddled vehicle according to one aspect of the present invention includes a head pipe, a front fork rotatably provided at the head pipe, a handle that is rotated together with the front fork, a master cylinder attached to the handle, a caliper provided at the front fork, a front cover that has a front surface portion arranged forwardly of the head pipe in a vehicle front-and-rear direction, a headlamp that has a light emission surface exposed from the front surface portion and is arranged between the head pipe and the front surface portion in a side view of the vehicle, and a hydraulic unit arranged between the head pipe and the front surface portion in the side view of the vehicle, wherein the hydraulic unit is located at a position farther downward than the headlamp and farther upward than an under bracket of the front fork, the hydraulic unit at least partially overlaps with the headlamp in a plan view of the vehicle, the hydraulic unit at least partially overlaps with the head pipe in a front view of the vehicle, the master cylinder and the hydraulic unit are connected to each other via an upper pipe, and the hydraulic unit and the caliper are connected to each other via a lower pipe, the upper pipe includes a first rubber hose, the lower pipe includes a steel pipe and a second rubber hose connected to each other with use of a connector, an end of the steel pipe of the lower pipe is connected to the hydraulic unit, an end of the second rubber hose of the lower pipe is connected to the caliper, the connector is at least partially located at a position farther downward than a center of the headlamp in a vehicle top-and-bottom direction, and the second rubber hose is connected to the connector at a position farther upward than the hydraulic unit.
   In the straddled vehicle, the headlamp and the hydraulic unit are arranged between the front surface portion of the front cover and the head pipe in the side view of the vehicle. Further, the hydraulic unit is located at the position farther downward than the headlamp. Further, the hydraulic unit at least partially overlaps with the headlamp in the front view of the vehicle. Thus, a space in which the headlamp and the hydraulic unit are arranged can be reduced in the front-and-rear direction.
   Further, the hydraulic unit is located downwardly of the headlamp, and the hydraulic unit at least partially overlaps with the head pipe in the front view of the vehicle. Therefore, as compared to the case where the hydraulic unit is arranged leftwardly or rightwardly of the head pipe or the headlamp, an amount of bending of the first and second rubber hoses required during an operation of the handle is reduced. Therefore, it is not necessary to largely ensure a space for allowing bending of the first and second rubber houses.
   Further, because the hydraulic unit is located at the position farther downward than the headlamp, as compared to the case where the hydraulic unit is arranged at a position farther upward than the headlamp, the upper pipe can extend in the top-and-bottom direction. In this case, the first rubber hose can be curved gently between the master cylinder provided at the handle and the hydraulic unit. Thus, an amount of bending of the first rubber hose during the operation of the handle is more sufficiently reduced. Therefore, it is not necessary to largely ensure the space for allowing bending of the first rubber hose.
   Here, when the hydraulic unit is located at the position farther downward than the headlamp, a distance between the hydraulic unit and the caliper is reduced as compared to the case where the hydraulic unit is arranged at a position farther upward than the headlamp. In this case, if the rubber hose is provided to extend from the hydraulic unit to the caliper, the rubber hose cannot be curved gently, an amount of bending of the rubber hose during the operation of the handle is increased. Thus, a large space for allowing bending of the rubber hose may be required.
   As such, the lower pipe of the present invention includes the steel pipe and the second rubber hose connected to each other with use of the connector. The connector is at least partially located at the position farther downward than the center of the headlamp in the vehicle top-and-bottom direction, and the second rubber hose is connected to the connector at the position farther upward than the hydraulic unit. In this case, as compared to the case where the hydraulic unit and the caliper are connected to each other only by the second rubber hose, the second rubber hose can extend in the top-and-bottom direction. Therefore, the second rubber hose can be curved gently between the connector and the caliper, and an amount of bending of the second rubber hose during the operation of the handle is reduced. Therefore, it is not necessary to largely ensure the space for allowing bending of the second rubber hose.
   Further, the steel pipe has strength higher than that of the rubber hose, so that a steel pipe having a diameter smaller than that of each of the first and second rubber hoses can be used. Thus, a space occupied by the lower pipe extending from the hydraulic unit to the second rubber hose is reduced. Further, because the steel pipe has high rigidity, a layout of the steel pipe that passes through a limited space around the headlamp and the head pipe can be easily realized. Therefore, the connector that connects the steel pipe to the second rubber hose can be at least partially fixed at the position farther downward than the center of the headlamp in the vehicle top-and-bottom direction.
   The second rubber hose extends from the connector to the caliper, so that an amount of bending of a portion, in the vicinity of the connector, of the second rubber hose is smaller than amounts of bending of other portions during the operation of the handle. In this case, the connector is at least partially fixed to the position farther downward than the center of the headlamp in the vehicle top-and-bottom direction, whereby a portion, having a small amount of bending, of the second rubber hose is arranged in the vicinity of the headlamp together with the connector. Therefore, the headlamp can be arranged closer to the connector and the second rubber hose.
   As a result, the front surface portion of the front cover can be arranged closer to the head pipe in the front-and-rear direction, and the straddled vehicle in which the ABS is included and the size of the front portion of the vehicle in the front-and-rear direction can be reduced is realized.
(2) The connector may be arranged to extend in parallel with a central axis of the head pipe. In this case, the steel pipe and the second rubber hose are arranged linearly at a position of the connector and its vicinity. Because the second rubber hose extends in parallel with the central axis of the head pipe from the connector, the second rubber hose can extend to a position of the caliper without largely being bent.
(3) A vertical plane passing through a center of the vehicle in a vehicle left-and-right direction may be defined, and a first space and a second space sectioned by the vertical plane may be defined, the caliper may be arranged in the first space and at a position spaced apart from the vertical plane in the front view of the vehicle, and the connector may be arranged in the first space.
   In this case, the length of the second rubber hose from the connector to the caliper is prevented from being excessively large. Thus, the space for allowing bending of the second rubber hose is reduced.
(4) The connector may be arranged at a position farther upward than the hydraulic unit, and the hydraulic unit may be arranged such that a center of the hydraulic unit in the vehicle left-and-right direction is located in the second space.
   In this case, when the second rubber hose is bent by the operation of the handle by the rider, the second rubber hose is inhibited from interfering with the hydraulic unit.
(5) The steel pipe may include a first portion that extends from the hydraulic unit to a position farther upward than a center of the headlamp in the vehicle top-and-bottom direction in the front view of the vehicle, a second portion that extends from a position farther upward than the center of the headlamp in the vehicle top-and-bottom direction to a position farther downward than the center of the headlamp in the vehicle top-and-bottom direction in the front view of the vehicle, and a third portion that connects an upper end of the first portion to an upper end of the second portion at a position farther upward than the center of the headlamp in the vehicle top-and-bottom direction, the connector may be connected to a lower end of the second portion, and the first, second and third portions of the steel pipe may at least partially overlap with the headlamp in the front view of the vehicle.
   The steel pipe can be bent at a radius smaller than a radius at which the second rubber hose is bent. Therefore, it is possible to easily arrange the first, second and third portions in a limited space by processing the steel pipe. Further, a steel pipe having a diameter smaller than that of the first or second rubber hose is used. Thus, even in the case where part of the steel pipe overlaps with the headlamp in the front view of the vehicle, the constitution in which the steel pipe and the headlamp are included can be made compact in the front-and-rear direction.
(6) The front cover may further have a rear surface portion arranged rearwardly of the head pipe in the vehicle front-and-rear direction, a front edge of the front surface portion in the side view of the vehicle may extend along a first virtual line that is in parallel with a central axis of the head pipe in the side view of the vehicle at a space forward of the head pipe, and a rear edge of the rear surface portion in the side view of the vehicle may extend along a second virtual line that is in parallel with the central axis of the head pipe in the side view of the vehicle at a space rearward of the head pipe.

In this case, because the front surface portion and the rear surface portion of the front cover have outer shapes that extend substantially in parallel with the central axis of the head pipe and are substantially flat in the side view of the vehicle, the size of the front cover in the front-and-rear direction can be more sufficiently reduced. Thus, the flat front cover that is made compact in the front-and-rear direction is realized.

### BRIEF DESCRIPTION OF THE SEVERAL VIEWS OF THE DRAWING

Fig. 1 is a side view of a motorcycle according to one embodiment of the present invention;
Fig. 2 is a perspective view showing the appearance of a head pipe and a body frame included in the motorcycle of Fig. 1;
Fig. 3 is a front view of the motorcycle of Fig. 1;
Fig. 4 is a diagram for explaining a positional relationship among the headlamp, a hydraulic unit and an under bracket inside of a front cover;
Fig. 5 is a diagram for explaining the positional relationship among the headlamp, the hydraulic unit and the under bracket inside of the front cover;
Fig. 6 is a left side view showing an attachment state of an ABS for a front wheel;
Fig. 7 is a right side view showing the attachment state of the ABS for the front wheel; and
Fig. 8 is a front view showing the attachment state of the ABS for the front wheel.

### DESCRIPTION OF THE PREFERRED EMBODIMENTS

A straddled vehicle according to one embodiment of the present invention will be described below with reference to the drawings. In the following description, a motorcycle is described as one example of the straddled vehicle.

### [1] Schematic Configuration of Motorcycle

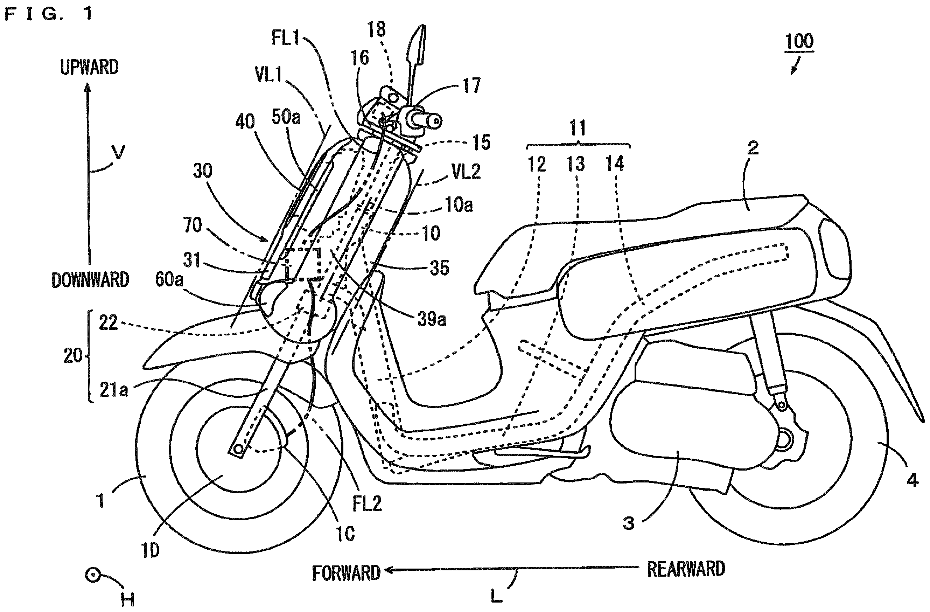

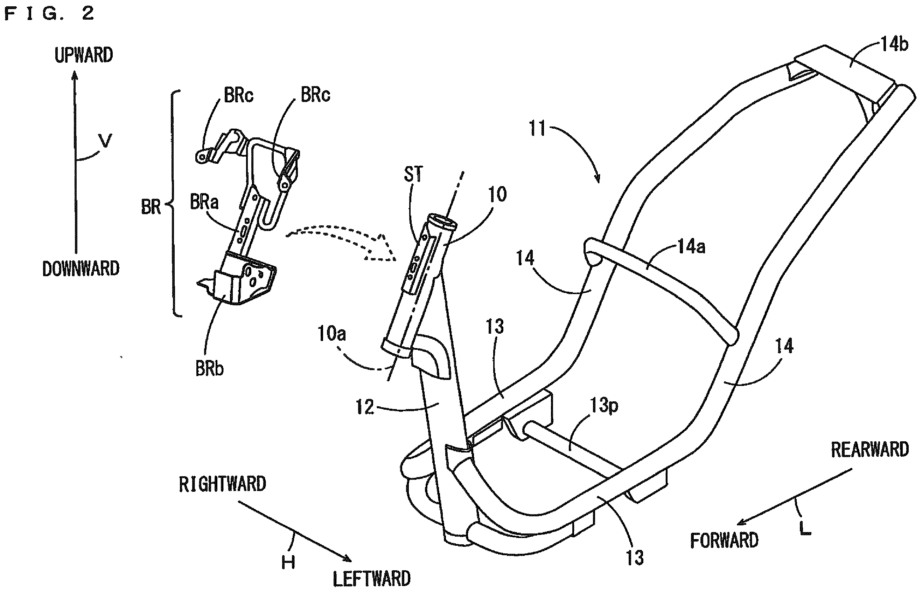

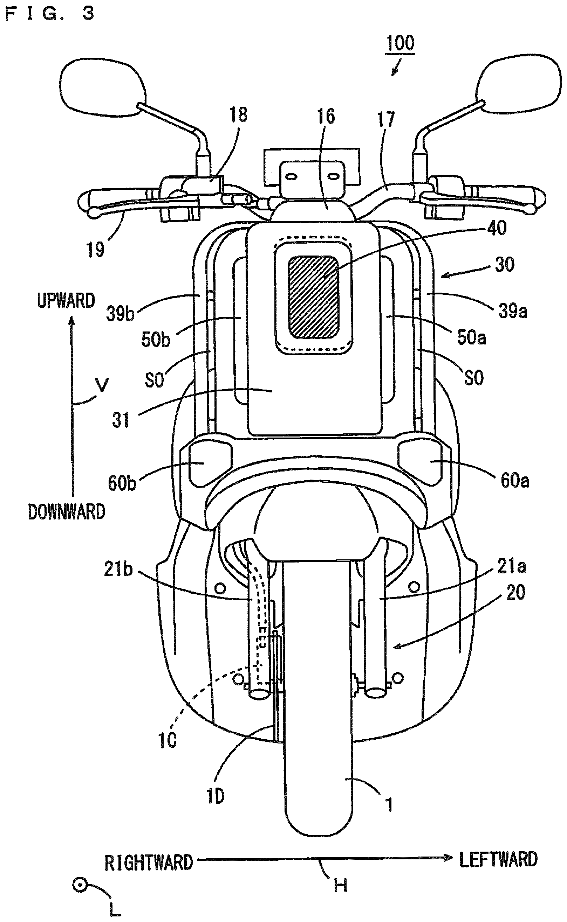

Fig. 1 is a side view of the motorcycle according to the one embodiment of the present invention, Fig. 2 is a perspective view showing the appearance of a head pipe and a body frame included in the motorcycle 100 of Fig. 1, and Fig. 3 is a front view of the motorcycle 100 of Fig. 1.

In Figs. 1 and 3, the motorcycle 100 is shown standing up to be perpendicular to a road surface. In each of Fig. 1 and subsequent given diagrams, a front-and-rear direction L, a left-and-right direction H and a top-and-bottom direction V of the motorcycle 100 are suitably indicated by arrows. In the following description, a direction in which the arrow is directed in the front-and-rear direction L is referred to as forward, and its opposite direction is referred to as rearward. Further, a direction in which the arrow is directed in the left-and-right direction H is referred to as leftward, and its opposite direction is referred to as rightward. A direction in which the arrow is directed in the top-and-bottom direction V is referred to as upward, and its opposite direction is referred to as downward.

As shown in Fig. 1, the motorcycle 100 includes a head pipe 10 and a body frame 11. As shown in Fig. 2, the body frame 11 mainly includes one down frame 12, a pair of left and right first rear frames 13 and a pair of left and right second rear frames 14. The head pipe 10 is provided to pass through a center of the motorcycle 100 in the left-and-right direction H and extend obliquely, forwardly and downwardly in a vertical plane extending in the front-and-rear direction L. A fixing member ST extending in parallel with a central axis 10a of the head pipe 10 is joined to a front portion of the head pipe 10. Further, a bracket BR for attaching a headlamp 40 (Fig. 1) and a hydraulic unit 70 (Fig. 1), described below, and other members to the head pipe 10 is provided at the fixing member ST. The bracket BR is configured to be attachable to and detachable from the fixing member ST with use of a bolt, for example. Fig. 2 shows the bracket BR being detached from the head pipe 10.

The bracket BR includes a support BRa, a hydraulic unit attachment portion BRb and two lamp attachment portions BRc. The support BRa is formed to have an outer shape substantially the same as that of the fixing member ST and extend in parallel with the central axis 10a of the head pipe 10. The hydraulic unit attachment portion BRb is provided in the vicinity of a lower end of the support BRa. The two lamp attachment portions BRc are attached to an upper end of the support BRa and arranged at positions farther upward than the support BRa and at a distance from each other in the left-and-right direction H.

The one down frame 12 is provided to extend obliquely, rearwardly and downwardly from a rear portion of the head pipe 10. In this manner, in the present embodiment, only the one down frame 12 is joined to the head pipe 10 as the body frame 11.

The left and right first rear frames 13 are curved while spreading in the left-and-right direction H from positions in the vicinity of the lower end of the down frame 12, and extend rearwardly. A cross tube 13p extending in the left-and-right direction H is provided at lower ends of the rear ends of the left and right first rear frames 13. The left and right second rear frames 14 extend respectively, obliquely, rearwardly and upwardly from the rear ends of the left and right first rear frames 13. Two connection pieces 14a, 14b are provided to respectively connect center portions of the left and right second rear frames 14 to each other and connect rear ends of the left and right second rear frames 14 to each other.

As shown in Fig. 1, a steering shaft 15 and a front fork 20 are supported at the head pipe 10 to be rotatable about the central axis 10a of the head pipe 10. Specifically, the steering shaft 15 is inserted into the head pipe 10. The steering shaft 15 extends in a direction of the central axis 10a of the head pipe 10 from a position farther downward than the head pipe 10 to a position farther upward than the head pipe 10.

The front fork 20 is mainly constituted by a pair of left and right fork tubes 21a, 21b (Fig. 3) and an under bracket 22. The under bracket 22 is connected to a lower end of the steering shaft 15 at a position below the head pipe 10, and couples upper ends of the left and right fork tubes 21a, 21b to each other. A front wheel 1 and a disc rotor 1D are rotatably attached to lower ends of the pair of fork tubes 21a, 21b. Further, a caliper 1C for supplying a braking force to the front wheel 1 via the disc rotor 1D is attached to the right fork tube 21 b (Fig. 3).

A handle 17 is attached to an upper end of the steering shaft 15 via a handlebar stem 16. The handle 17 is rotated together with the front fork 20 by an operation of a rider. As shown in Fig. 3, a master cylinder 18 and a brake lever 19 for the front wheel 1 are attached to a right portion of the handle 17. The rider operates the brake lever 19, so that a brake hydraulic pressure corresponding to an operation amount of the brake lever 19 is generated in the master cylinder 18.

A front cover 30 is further attached to the head pipe 10 via the bracket BR of Fig. 2. In this case, the front cover 30 is supported at the head pipe 10 independently from the steering shaft 15 and the front fork 20. Thus, the front fork 20 is rotatable relative to the front cover 30. The front cover 30 has a front surface portion 31, a rear surface portion 35 and a pair of left and right side surface portions 39a, 39b (Fig. 3).

As shown in Fig. 1, the front surface portion 31 is arranged forwardly of the head pipe 10 in the front-and-rear direction L. A front edge of the front surface portion 31 in a side view of the vehicle is in a space farther forward than the head pipe 10 and extends along a first virtual line VL1 that is in parallel with the central axis 10a of the head pipe 10 in the side view of the vehicle. Here, the front edge of the front surface portion 31 in the side view of the vehicle forms part of a contour of the front surface portion 31 when the front surface portion 31 is viewed from a position sideward of the motorcycle 100. Further, the above expression "the front edge of the front surface portion 31 in the side view of the vehicle extends along the first virtual line VL1" means that the front edge of the front surface portion 31 in the side view of the vehicle is not spaced apart from the first virtual line VL1 by a distance larger than a certain distance (10 cm, for example) in the side view of the vehicle, and that the front edge of the front surface portion 31 in the side view of the vehicle extends in parallel with the first virtual line VL1 or extends substantially in parallel with the first virtual line VL1 without inclining by an angle equal to or larger than a certain angle (15°, for example) with respect to the first virtual line VL1.

The rear surface portion 35 is arranged rearwardly of the head pipe 10 in the front-and-rear direction L. A rear edge of the rear surface portion 35 in the side view of the vehicle is in a space farther rearward than the head pipe 10 and extends along a second virtual line VL2 that is in parallel with the central axis 10a of the head pipe 10 in the side view of the vehicle. Here, the rear edge of the rear surface portion 35 in the side view of the vehicle forms part of an contour of the rear surface portion 35 when the front surface portion 31 is viewed from a position sideward of the motorcycle 100. Further, the above expression "the rear edge of the rear surface portion 35 in the side view of the vehicle extends along the second virtual line VL2" means that the rear edge of the rear surface portion 35 in the side view of the vehicle is not spaced from the second virtual line VL2 by a distance larger than a certain distance (10 cm, for example) in the side view of the vehicle, and that the rear edge of the rear surface portion 35 in the side view of the vehicle extends in parallel with the second virtual line VL2 or extends substantially in parallel with the second virtual line VL2 without inclining by an angle equal to or larger than a certain angle (15°, for example) with respect to the second virtual line VL2.

The front surface portion 31 and the rear surface portion 35 face each other with the head pipe 10 interposed therebetween. The left side surface portion 39a is arranged leftwardly of the head pipe 10 and connects a left side edge of the front surface portion 31 to a left side edge of the rear surface portion 35. The right side surface portion 39b (Fig. 3) is arranged rightwardly of the head pipe 10 and connects a right side edge of the front surface portion 31 to a right side edge of the rear surface portion 35. As shown in Fig. 3, a slit opening SO is formed in each of the left and right side surface portions 39a, 39b. The slit opening SO penetrates the front cover 30 in the front-and-rear direction L. Further, the slit opening SO extends in the top-and-bottom direction V in a front view of the vehicle.

The hydraulic unit 70 is further attached to the head pipe 10 via the hydraulic unit attachment portion BRb of the bracket BR of Fig. 2. The hydraulic unit 70 is stored inside of the front cover 30 and is arranged between the head pipe 10 and the front surface portion 31 of the front cover 30. The master cylinder 18 and the hydraulic unit 70 are connected to each other through an upper pipe FL1 for a brake liquid. Further, the hydraulic unit 70 and the caliper 1C are connected to each other through a lower pipe FL2 for a brake liquid.

In the present embodiment, an ABS (Antilock Brake System) for the front wheel 1 is constituted by the caliper 1C, the disc rotor 1D, the master cylinder 18, the brake lever 19, the hydraulic unit 70, the upper pipe FL1 and the lower pipe FL2.

As shown in Fig. 3, the headlamp 40, a pair of left and right position lamps 50a, 50b and a pair of left and right flasher lamps 60a, 60b are provided at the front cover 30. As shown in Fig. 1, the headlamp 40 is arranged between the head pipe 10 and the front surface portion 31 of the front cover 30. Further, the headlamp 40 has a light emission surface exposed forwardly of the vehicle from an opening formed in the front surface portion 31 of the front cover 30. In Fig. 3, hatching is applied to the light emission surface of the headlamp 40 in order to facilitate understanding of a shape of the light emission surface of the headlamp 40. Part of the headlamp 40 is attached to the two lamp attachment portions BRc of the bracket BR of Fig. 2.

As shown in Fig. 1, a seat 2 is provided at a position rearward of the front cover 30 by a certain distance. The seat 2 extends in the front-and-rear direction L from a substantially central upper portion of the motorcycle 100 to a rear end of the vehicle. Further, the seat 2 is supported by the left and right second rear frames 14 of Fig. 2.

An engine 3 is provided below the seat 2 and the left and right second rear frames 14. The engine 3 is a unit-swing type engine and is supported at the body frame 11 via a pivot shaft (not shown). In this state, the engine 3 is swingable in the top-and-bottom direction V with the pivot shaft as a center. A rear wheel 4 is rotatably attached to a rear end of the engine 3. The rear wheel 4 is rotated by motive power generated by the engine 3.

### [2] Arrangement of Each Constituent Element Inside of Front Cover

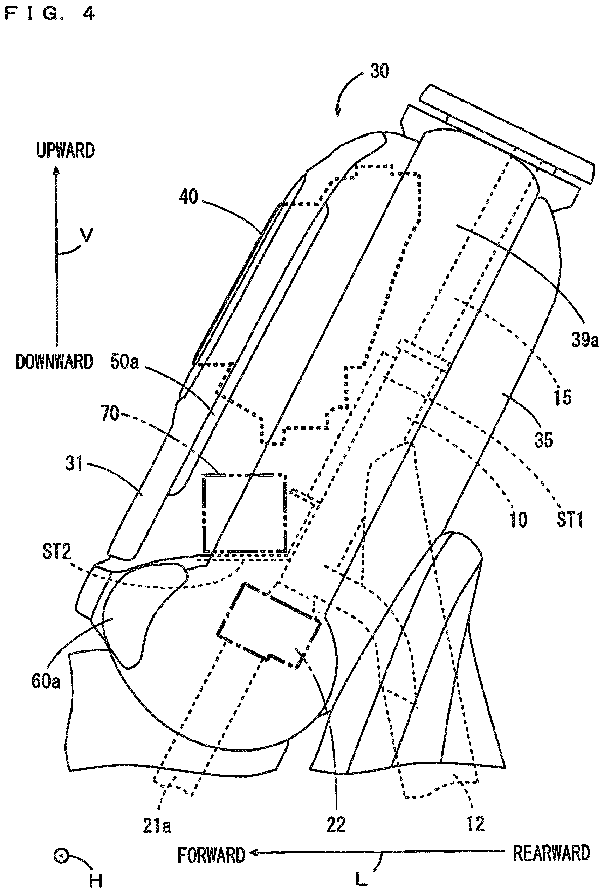

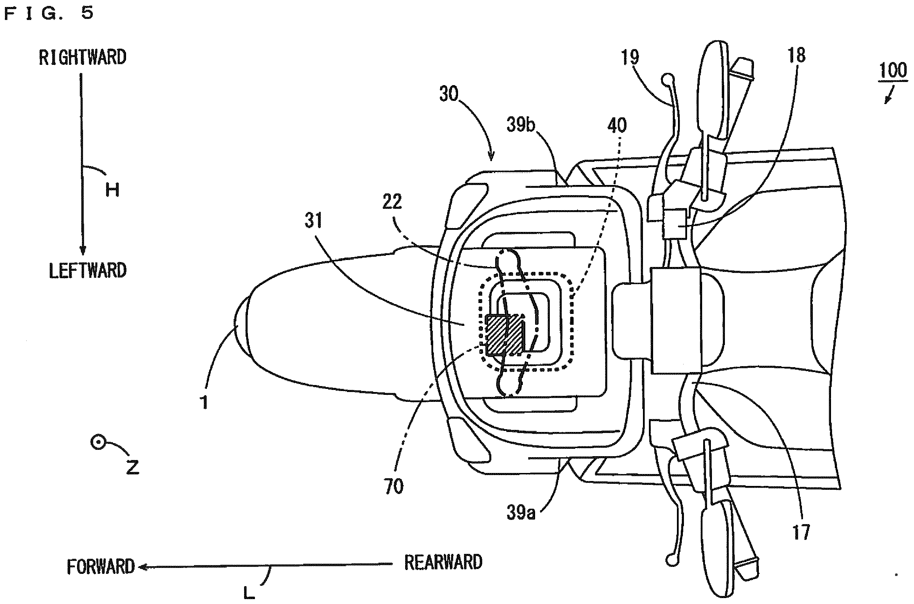

Figs. 4 and 5 are diagrams for explaining a positional relationship among the headlamp 40, the hydraulic unit 70 and the under bracket 22 inside of the front cover 30. A side view of the front cover 30 and its periphery is shown in Fig. 4. A plan view of a portion, farther forward than the seat 2, of the motorcycle 100 is shown in Fig. 5. In Figs. 4 and 5, an outer shape of the headlamp 40 inside of the front cover 30 is indicated by a thick dotted line. Further, an outer shape of the hydraulic unit 70 inside of the front cover 30 is indicated by a thick two-dots and dash line. Further, an outer shape of the under bracket 22 inside of the front cover 30 is indicated by a thick one-dot and dash line. Further, in Fig. 5, hatching is applied to the hydraulic unit 70 in order to facilitate understanding of the shape of the hydraulic unit 70.

Inside of the front cover 30, the hydraulic unit 70 is located at a position farther downward than the headlamp 40 and farther upward than the under bracket 22 as shown in Fig. 4. Further, as shown in Fig. 5, the hydraulic unit 70 overlaps with the headlamp 40 in the front view of the vehicle. Further, part of the hydraulic unit 70 overlaps with the under bracket 22 in the plan view of the vehicle.

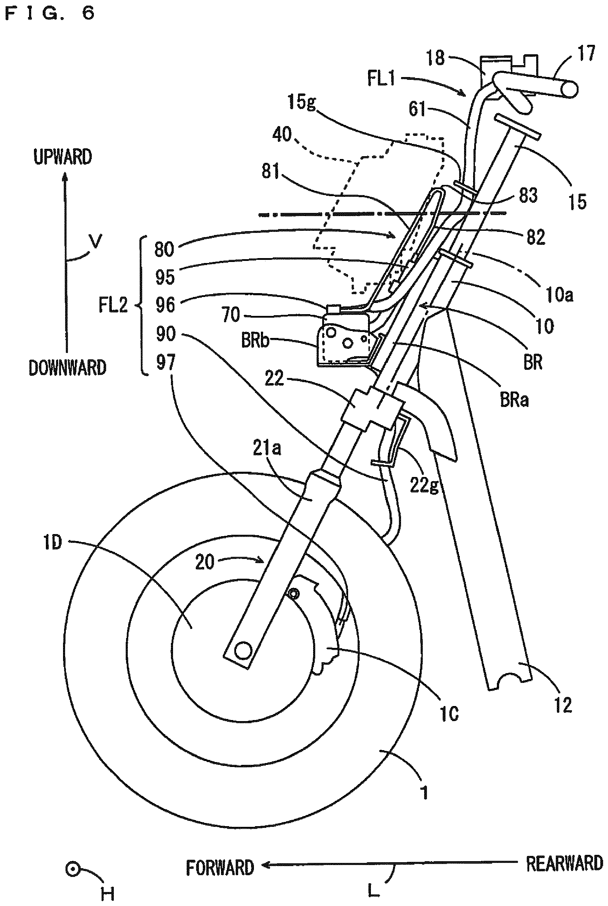

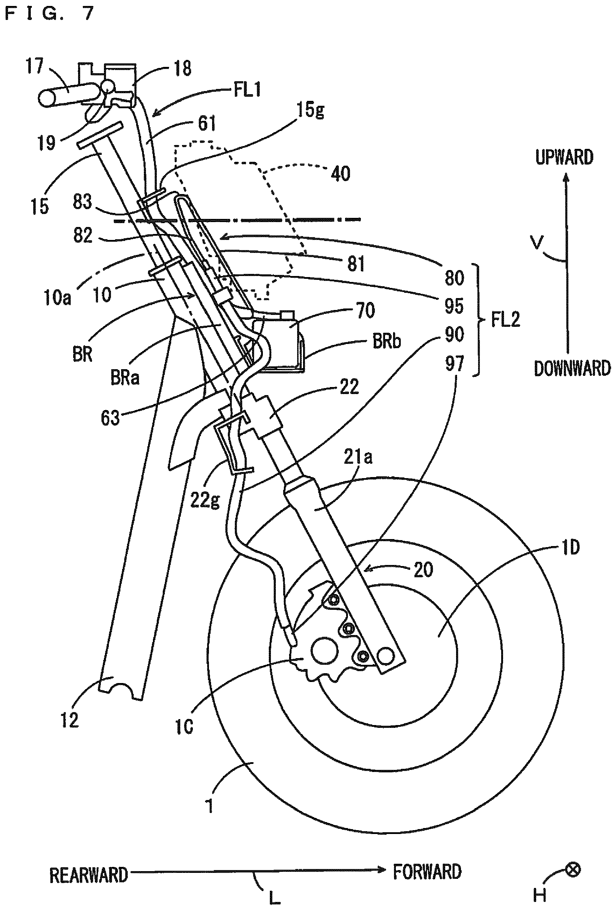

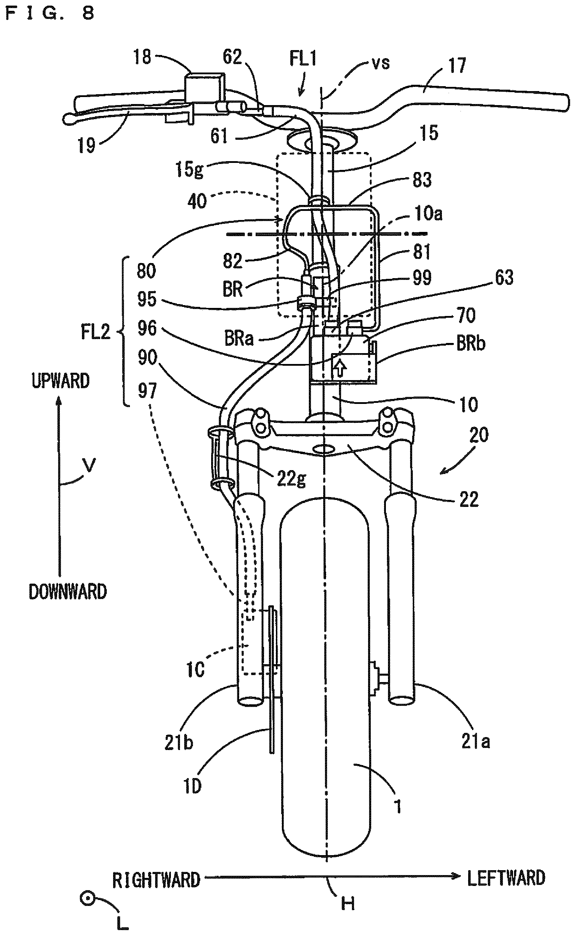

Fig. 6 is a left side view showing an attachment state of the ABS for the front wheel 1, Fig. 7 is a right side view showing the attachment state of the ABS for the front wheel 1, and Fig. 8 is a front view showing the attachment state of the ABS for the front wheel 1. In Figs. 6 to 8, parts of the front wheel 1, the handle 17, the head pipe 10, the down frame 12, the steering shaft 15, the front fork 20, the headlamp 40 and the bracket BR are shown together with a plurality of constituent elements of the ABS for the front wheel 1. The headlamp 40 is indicated by a dotted line. Two lamp attachment portions BRc (Fig. 2) of the bracket BR are not shown.

As shown in Fig. 8, a right portion of the hydraulic unit 70 overlaps with the head pipe 10 in the front view of the vehicle. On the other hand, as shown in Fig. 8, a left portion of the hydraulic unit 70 is located leftwardly of the head pipe 10 in the front view of the vehicle.

As shown in Fig. 8, the upper pipe FL1 connecting the master cylinder 18 to the hydraulic unit 70 is constituted by one rubber hose 61 and two metallic connectors 62, 63. The connectors 62, 63 are respectively provided at both ends of the rubber hose 61.

One end of the rubber hose 61 is connected to the master cylinder 18 via the connector 62. The rubber hose 61 extends leftwardly from the master cylinder 18 to a position in the vicinity of the upper end of the steering shaft 15, and is curved gently and downwardly. Further, as shown in Figs. 6 and 7, the rubber hose 61 passes between the steering shaft 15 and the head pipe 10, and the headlamp 40 in the side view of the vehicle, and extends obliquely, forwardly and downwardly. As shown in Fig. 7, the other end of the rubber hose 61 is connected to the hydraulic unit 70 via the connector 63.

A guide member 15g is attached to a portion, located at a position farther upward than the head pipe 10, of the steering shaft 15. The guide member 15g supports the rubber hose 61 such that the rubber hose 61 can move freely within a certain range in the vicinity of the steering shaft 15. As shown in Fig. 8, part of the upper pipe FL1 overlaps with the steering shaft 15 and the headlamp 40 in the front view of the vehicle.

The lower pipe FL2 that connects the hydraulic unit 70 to the caliper 1C is constituted by one steel pipe 80, one rubber hose 90 and three metallic connectors 95, 96, 97. The steel pipe 80 and the rubber hose 90 are connected to each other with use of the connector 95. The connector 96 is provided at the end, not connected to the rubber hose 90, of the steel pipe 80, and the connector 97 is provided at the end, not connected to the steel pipe 80, of the rubber hose 90. The end, not connected to the rubber hose 90, of the steel pipe 80 is connected to the hydraulic unit 70 via the connector 96. The end, not connected to the steel pipe 80, of the rubber hose 90 is connected to the caliper 1C via the connector 97.

The connector 95 is fixed to the support BRa of the bracket BR by a fixing member 99 (Fig. 8). In this state, the connector 95 is located at a position farther downward than the center of the headlamp 40 in the top-and-bottom direction V. In each of Figs. 6 to 8, a position of the center of the headlamp 40 in the top-and-bottom direction V is indicated by a thick one-dot and dash line. Further, the connector 95 is located at a position farther upward than the hydraulic unit 70.

As shown in Fig. 8, the steel pipe 80 includes a first portion 81, a second portion 82 and a third portion 83. The first portion 81 passes through the center of the motorcycle 100 in the left-and-right direction H and located leftwardly of a vertical plane 'vs' extending in the front-and-rear direction L. Further, the first portion 81 is located at a position farther leftward than the rubber hose 61 of the upper pipe FL1 in the front view of the vehicle. Further, as shown in Fig. 6, the first portion 81 extends in parallel with the central axis 10a of the head pipe 10 from the hydraulic unit 70 to a position farther upward than the center of the headlamp 40 in the top-and-bottom direction V in the side view of the vehicle. Further, the first portion 81 is located at a position farther forward than the rubber hose 61 of the upper pipe FL1 in the side view of the vehicle.

As shown in Fig. 8, the second portion 82 is located rightwardly of the vertical plane vs. Further, the second portion 82 is located at a position farther rightward than the rubber hose 61 of the upper pipe FL1 in the front view of the vehicle. Further, as shown in Fig. 7, the second portion 82 extends in parallel with the central axis 10a of the head pipe 10 from a position farther upward than the center of the headlamp 40 in the top-and-bottom direction V to a position farther downward than the center of the headlamp 40 in the top-and-bottom direction V in the side view of the vehicle. Further, the second portion 82 is located at a position farther forward than the rubber hose 61 of the upper pipe FL1 in the side view of the vehicle. The connector 95 is connected to the lower end of the second portion 82.

As shown in Fig. 8, the third portion 83 connects the upper end of the first portion 81 to the upper end of the second portion 82 at a position farther upward than the center of the headlamp 40 in the top-and-bottom direction V. Further, as shown in Figs. 6 to 8, the third portion 83 connects the upper end of the first portion 81 to the upper end of the second portion 82 at a position farther forward than the rubber hose 61 of the upper pipe FL1.

The rubber hose 90 is connected to the connector 95 at a position farther upward than the hydraulic unit 70. As shown in Figs. 6 to 8, a guide member 22g is attached to the right end of the under bracket 22. The guide member 22g supports the rubber hose 90 such that the rubber hose 90 can move freely within a certain range in the vicinity of the upper end of the right fork tube 21b.

### [3] Effects

(a) As described above, inside of the front cover 30 of the motorcycle 100, the hydraulic unit 70 is located at a position farther downward than the headlamp 40 and overlaps with the headlamp 40 in the front view of the vehicle. Thus, the size of the space in which the headlamp 40 and the hydraulic unit 70 are arranged can be reduced in the front-and-rear direction L.
   Further, the hydraulic unit 70 is located downwardly of the headlamp 40, and the hydraulic unit 70 partially overlaps with the head pipe 10 in the front view of the vehicle. Thus, as compared to the case where the entire hydraulic unit 70 is arranged leftwardly or rightwardly of the head pipe 10 or the headlamp 40, a required amount of bending of the rubber hoses 61, 90 of the upper pipe FL1 and the lower pipe FL2 during an operation of the handle 17 is reduced. Therefore, it is not necessary to largely ensure a space for allowing bending of the rubber hoses 61, 90 inside of the front cover 30.
   Further, the hydraulic unit 70 is located at a position farther downward than the headlamp 40. Thus, as compared to the case where the hydraulic unit 70 is arranged at a position farther upward than the headlamp 40, the rubber hose 61 can extend in the top-and-bottom direction V. In this case, the rubber hose 61 can be curved gently between the master cylinder 18 and the hydraulic unit 70. Thus, an amount of bending of the rubber hose 61 during the operation of the handle 17 is reduced. Therefore, it is not necessary to largely ensure a space for allowing bending of the rubber hose 61 inside of the front cover 30.
   Here, when the hydraulic unit 70 is located at a position farther downward than the headlamp 40, as compared to the case where the hydraulic unit 70 is arranged at a position farther upward than the headlamp 40, a distance between the hydraulic unit 70 and the caliper 1C is reduced. In this case, if the rubber hose is provided to extend from the hydraulic unit 70 to the caliper 1C, the rubber hose cannot be curved gently. Therefore, an amount of bending of the rubber hose during the operation of the handle 17 is increased, and a large space for allowing bending of the rubber hose may be required.
   As such, the lower pipe FL2 according to the present embodiment includes the steel pipe 80 and the rubber hose 90 connected to each other with use of the connector 95. The connector 95 is located at a position farther downward than the center of the headlamp 40 in the top-and-bottom direction V, and the rubber hose 90 is connected to the connector 95 at a position farther upward than the hydraulic unit 70. In this case, as compared to the case where the hydraulic unit 70 and the caliper 1C are connected to each other only by the rubber hose 90, the rubber hose 90 can extend in the top-and-bottom direction V. Therefore, the rubber hose 90 can be curved gently between the connector 95 and the caliper 1C, and an amount of bending of the rubber hose 90 during the operation of the handle 17 is reduced. Therefore, it is not necessary to largely ensure a space for allowing bending of the rubber hose 90.
   Further, the steel pipe 80 has high strength as compared to the rubber hoses 61, 90, so that a steel pipe having a diameter smaller than that of each of the rubber hoses 61, 90 can be used. Thus, a space occupied by the lower pipe FL2 that extends from the hydraulic unit 70 to the rubber hose 90 is reduced. Further, the steel pipe 80 has high rigidity, so that a layout of the lower pipe FL2 that passes through a limited space around the headlamp 40 and the head pipe 10 can be easily realized. Therefore, the connector 95 can be fixed to a position farther downward than the center of the headlamp 40 in the top-and-bottom direction V and farther upward than the lower end of the headlamp 40.
   The rubber hose 90 extends from the connector 95 to the caliper 1C, so that a portion, in the vicinity of the connector 95, of the rubber hose 90 has an amount of bending smaller than an amount of bending of each of other portions during the operation of the handle 17. In this case, the connector 95 is fixed to a position farther downward than the center of the headlamp 40 in the top-and-bottom direction V, so that a portion, having a small amount of bending, of the rubber hose 90 is arranged in the vicinity of the headlamp 40 together with the connector 95. Therefore, the headlamp 40 can be arranged closer to the connector 95 and the rubber hose 90.
   As a result, the front surface portion 31 of the front cover 30 can be arranged closer to the head pipe 10 in the front-and-rear direction, so that the size of the front portion of the motorcycle 100 including the ABS can be reduced in the front-and-rear direction L.
(b) As described above, the upper pipe FL1 including the rubber hose 61 is provided to extend from the handle 17 to the hydraulic unit 70. Further, in the lower pipe FL2, the rubber hose 90 is provided to extend from the connector 95 located at a position farther downward than the headlamp 40 and farther upward than the hydraulic unit 70 to the caliper 1C. In this case, a total of the length of the rubber hose 61 of the upper pipe FL1 and the length of the rubber hose 90 of the lower pipe FL2 is substantially equal to the length of a single rubber hose that connects the master cylinder 18 to the caliper 1C in the motorcycle 100 not including the ABS.
   Therefore, in the case where the ABS is temporarily detached from the motorcycle 100 for maintenance of the ABS, for example, the hydraulic unit 70, the upper pipe FL1 and the lower pipe FL2 are detached from the motorcycle 100. After that, a substitute single rubber hose can be easily attached between the master cylinder 18 and the caliper 1C. Thus, because the braking force of the front wheel 1 can be easily ensured with the ABS not included, the motorcycle 100 can be driven. Further, in this case, the length of the rubber hose between the master cylinder 18 and the caliper 1C does not change largely before and after detachment of the ABS, so that an operational feeling of the brake lever 19 after the detachment of the ABS is maintained substantially equal to the operational feeling before the detachment of the ABS.
(c) As shown in Figs. 7 and 8, the connector 95 of the lower pipe FL2 is arranged to extend in parallel with the central axis 10a of the head pipe 10. In this case, the steel pipe 80 and the rubber hose 90 are arranged linearly at a position of the connector 95 and its vicinity. Thus, because a portion in the vicinity of the upper end of the rubber hose 90 extends in parallel with the central axis 10a of the head pipe 10 from the connector 95, the rubber hose 90 can extend to the caliper 1C without being largely bent.
(d) As shown in Fig. 8, the caliper 1C is arranged rightwardly of the vertical plane vs in the front view of the vehicle. Further, similarly to the caliper 1C, the connector 95 is arranged rightwardly of the vertical plane vs in the front view of the vehicle. In this manner, the caliper 1C and the connector 95 are located rightwardly of the vertical plane vs, so that the length of the rubber house 90 from the connector 95 to the caliper 1C is prevented from being excessively large. Thus, a space for allowing bending of the rubber hose 90 is reduced.
(e) As described above, the connector 95 of the lower pipe FL2 is located rightwardly of the vertical plane vs and located at a position farther upward than the hydraulic unit 70. On the other hand, as indicated by an outlined arrow in Fig. 8, the center of the hydraulic unit 70 in the left-and-right direction H is located leftwardly of the vertical plane vs. In this manner, the connector 95 and the center of the hydraulic unit 70 in the left-and-right direction H are respectively located at the right and left of the vertical plane vs. Thus, when the rubber hose 90 of the lower pipe FL2 is bent, the rubber hose 90 is inhibited from interfering with the hydraulic unit 70.
(f) A steel pipe can be bent at a radius smaller than a radius of a rubber hose. Therefore, it is possible to easily fabricate the steel pipe 80 including the first portion 81, the second portion 82 and the third portion 83 by processing a steel pipe having a small diameter. Further, the steel pipe 80 having a small diameter is used. Thus, even in the case where part of the steel pipe 80 overlaps with the headlamp 40 in the front view of the vehicle, the constitution in which the steel pipe 80 and the headlamp 40 are included inside of the front cover 30 can be made compact in the front-and-rear direction.
(g) As described above, the front edge of the front surface portion 31 in the side view of the vehicle extends along the first virtual line VL1 that is in parallel with the central axis 10a of the head pipe 10 in the side view of the vehicle. Further, the rear edge of the rear surface portion 35 in the side view of the vehicle extends along the second virtual line VL2 that is in parallel with the central axis 10a of the head pipe 10 in the side view of the vehicle. Thus, the front surface portion 31 and the rear surface portion 35 extend substantially in parallel with the central axis 10a of the head pipe 10
and have substantially flat outer shapes. In this case, the size of the front cover 30 in the front-and-rear direction L can be more sufficiently reduced, Further, the front cover 30, which is made compact in the front-and-rear direction L and is flat, is realized.

### [4] Other Embodiments

(a) While the entire hydraulic unit 70 overlaps with the headlamp 40 in the plan view of the vehicle in the above-mentioned embodiment, the present invention is not limited to this. In the present invention, the hydraulic unit 70 may at least partially overlap with the headlamp 40 in the front view of the vehicle. Thus, as compared to the case where the headlamp 40 and the hydraulic unit 70 are arranged in the front-and-rear direction L in the plan view of the vehicle, a space in which the headlamp 40 and the hydraulic unit 70 are arranged can be reduced in the front-and-rear direction L.
(b) While part of the hydraulic unit 70 overlaps with the head pipe 10 in the front view of the vehicle in the above-mentioned embodiment, the present invention is not limited to this. The entire hydraulic unit 70 may overlap with the head pipe 10 in the front view of the vehicle.
(c) While the connector 95 of the lower pipe FL2 is located at a position farther downward than the center of the headlamp 40 in the top-and-bottom direction V in the above-mentioned embodiment, the present invention is not limited to this. In the present invention, the connector 95 may be at least partially located at a position farther downward than the center of the headlamp 40 in the top-and-bottom direction V. Thus, the rubber hose 90 can be connected to the connector 95 at a position further upward than the hydraulic unit 70.
(d) In the above-mentioned embodiment, the front edge of the front surface portion 31 in the side view of the vehicle extends along the first virtual line VL1 in the side view of the vehicle, and the rear edge of the rear surface portion 35 in the side view of the vehicle extends along the second virtual line VL2 in the side view of the vehicle. However, the present invention is not limited to this. The front edge of the front surface portion 31 in the side view of the vehicle may be formed not to extend along the first virtual line VL1 in the side view of the vehicle. Further, the rear edge of the rear surface portion 35 in the side view of the vehicle may be formed not to extend along the second virtual line VL2 in the side view of the vehicle. That is, the front surface portion 31 and the rear surface portion 35 of the front cover 30 do not have to respectively have flat shapes in the side view of the vehicle.
(e) While the only one down frame 12 is joined to the head pipe 10 of the motorcycle 100 as the body frame 11 in the above-mentioned embodiment, the present invention is not limited to this. For example, two or more than two frame members may be joined to the head pipe 10 as a body frame. In this case, a large-size body frame having high rigidity can be employed. Thus, the present invention can be applied to a large-size straddled vehicle.
(f) While the front cover 30 is supported at the head pipe 10 in the above-mentioned embodiment, the front cover 30 may be supported at the front fork 20 or the body frame 11.
(g) While the embodiment, described above, is an example in which the present invention is applied to the motorcycle, the invention is not limited to this. The present invention may be applied to another vehicle such as a four-wheeled automobile, a motor tricycle or an ATV (All Terrain Vehicle).

### [5] Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the head pipe 10 is an example of a head pipe, the front fork 20 is an example of a front fork, the handle 17 is an example of a handle, the master cylinder 18 is an example of a master cylinder, the caliper 1C is an example of a caliper, the front cover 30 is an example of a front cover, and the front surface portion 31 is an example of a front surface portion.

Further, the headlamp 40 is an example of a headlamp, the hydraulic unit 70 is an example of a hydraulic unit, the under bracket 22 is an example of an under bracket, the upper pipe FL1 is an example of an upper pipe, the lower pipe FL2 is an example of a lower pipe, the rubber hose 61 is an example of a first rubber hose, the connector 95 is an example of a connector, the steel pipe 80 is an example of a steel pipe, the rubber hose 90 is an example of a second rubber hose, and the motorcycle 100 is an example of a straddled vehicle.

Further, the vertical plane vs is an example of a vertical plane, the first portion 81 of the steel pipe 80 is an example of a first portion, the second portion 82 of the steel pipe 80 is an example of a second portion, the third portion 83 of the steel pipe 80 is an example of a third portion, the rear surface portion 35 is an example of a rear surface portion, the central axis 10a is an example of a central axis of a head pipe, the first virtual line VL1 is an example of a first virtual line, and the second virtual line VL2 is an example of a second virtual line.

As each of constituent elements recited in the claims, various other elements having configurations or functions described in the claims can be also used.

## Claims

1. A straddled vehicle comprising:
a head pipe (10);
a front fork (20) rotatably provided at the head pipe (10);
a handle (17) configured to be rotated together with the front fork (20);
a master cylinder (18) attached to the handle (17);
a caliper (1C) provided at the front fork (20);
a front cover (30) that has a front surface portion (31) arranged forwardly of the head pipe (10) in a vehicle front-and-rear direction (L);
a headlamp (40)that has a light emission surface (20) exposed from the front surface portion (31) and is arranged between the head pipe (10) and the front surface portion (31) in a side view of the vehicle (100); and
a hydraulic unit (70) arranged between the head pipe (10) and the front surface portion (31) in the side view of the vehicle (100), wherein
the hydraulic unit (70) is located at a position farther downward than the headlamp (40) and farther upward than an under bracket (22) of the front fork (20),
the hydraulic unit (70) at least partially overlaps with the headlamp (40) in a plan view of the vehicle (100),
the hydraulic unit (70) at least partially overlaps with the head pipe (10) in a front view of the vehicle (100),
the master cylinder (18) and the hydraulic unit (70) are connected to each other via an upper pipe (FL1), and the hydraulic unit (70) and the caliper (1C) are connected to each other via a lower pipe (FL2),
the upper pipe (FL1) includes a first rubber hose (61),
the lower pipe (FL2) includes a steel pipe (80) and a second rubber hose (90) connected to each other with use of a connector (95),
an end of the steel pipe (80) of the lower pipe (FL2) is connected to the hydraulic unit (70),
an end of the second rubber hose (90) of the lower pipe (FL2) is connected to the caliper (1C),
the connector (95) is at least partially located at a position farther downward than a center of the headlamp (40) in a vehicle top-and-bottom direction (V), and
the second rubber hose (90) is connected to the connector (95) at a position farther upward than the hydraulic unit (70).

2. The straddled vehicle according to claim 1, wherein
the connector (95) is arranged to extend in parallel with a central axis (10a) of the head pipe (10).

3. The straddled vehicle according to claim 1 or 2, wherein
a vertical plane (vs) passing through a center of the vehicle (100) in a vehicle left-and-right direction (H) is defined, and a first space and a second space sectioned by the vertical plane (vs) are defined,
the caliper (1C) is arranged in the first space and at a position spaced apart from the vertical plane (vs) in the front view of the vehicle (100), and
the connector (95) is arranged in the first space.

4. The straddled vehicle according to claim 3, wherein
the connector (95) is arranged at a position farther upward than the hydraulic unit (70), and
the hydraulic unit (70) is arranged such that a center of the hydraulic unit (70) in the vehicle left-and-right direction (H) is located in the second space.

5. The straddled vehicle according to any one of claims 1 to 4, wherein
the steel pipe (80) includes
a first portion (81) that extends from the hydraulic unit (70) to a position farther upward than a center of the headlamp (40) in the vehicle top-and-bottom direction (V) in the front view of the vehicle (100),
a second portion (82) that extends from a position farther upward than the center of the headlamp (40) in the vehicle top-and-bottom direction (V) to a position farther downward than the center of the headlamp (40) in the vehicle top-and-bottom direction (V) in the front view of the vehicle (100), and
a third portion (83) that connects an upper end of the first portion (81) to an upper end of the second portion (82) at a position farther upward than the center of the headlamp (40) in the vehicle top-and-bottom direction (V),
the connector (95) is connected to a lower end of the second portion (82), and the first, second and third portions (81, 82, 83) of the steel pipe (80) at least partially overlap with the headlamp (40) in the front view of the vehicle (100).

6. The straddled vehicle according to any one of claims 1 to 5, wherein
the front cover (30) further has a rear surface portion (35) arranged rearwardly of the head pipe (10) in the vehicle front-and-rear direction (L),
a front edge of the front surface portion (31) in the side view of the vehicle (100) extends along a first virtual line (VL1) that is in parallel with a central axis (10a) of the head pipe (10) in the side view of the vehicle (100) at a space forward of the head pipe (10), and
a rear edge of the rear surface portion (35) in the side view of the vehicle (100) extends along a second virtual line (VL2) that is in parallel with the central axis (10a) of the head pipe (10) in the side view of the vehicle (100) at a space rearward of the head pipe (10).

## Patentansprüche

1. Ein gespreiztes Fahrzeug, umfassend:
ein Kopfrohr (10);
eine Vordergabel (20), die rotierbar an dem Kopfrohr (10) vorgesehen ist;
einen Griff (17), der konfiguriert ist, zusammen mit der Vordergabel (20) rotiert zu werden;
einen Masterzylinder (18), der an dem Griff (17) angebracht ist;
einen Bremssattel (1C), der an der Vordergabel (20) vorgesehen ist;
eine vordere Abdeckung (30), die einen vorderen Oberflächenabschnitt (31) aufweist, der vor dem Kopfrohr (10) in einer Fahrzeug-vorne-und-hinten-Richtung (L) angeordnet ist;
einen Scheinwerfer (40), der eine Lichtemissionsfläche (20), die von dem vorderen Oberflächenabschnitt (31) freigelegt ist, aufweist und zwischen dem Kopfrohr (10) und dem vorderen Oberflächenabschnitt (31) in einer Seitenansicht des Fahrzeugs (100) angeordnet ist; und
eine Hydraulikeinheit (70), die zwischen dem Kopfrohr (10) und dem vorderen Oberflächenabschnitt (31) in der Seitenansicht des Fahrzeugs (100) angeordnet ist, wobei
die Hydraulikeinheit (70) an einer Position weiter abwärts als der Scheinwerfer (40) und weiter aufwärts als eine untere Klammer (22) der Vordergabel (20) gelegen ist,
die Hydraulikeinheit (70) zumindest teilweise mit dem Scheinwerfer (40) in einer Draufsicht des Fahrzeugs (100) überlappt,
die Hydraulikeinheit (70) zumindest teilweise mit dem Kopfrohr (10) in einer Vorderansicht des Fahrzeugs (100) überlappt,
der Masterzylinder (18) und die Hydraulikeinheit (70) miteinander über ein oberes Rohr (FL1) verbunden sind, und die Hydraulikeinheit (70) und der Bremssattel (1C) miteinander über ein unteres Rohr (FL2) verbunden sind,
das obere Rohr (FL1) einen ersten Gummischlauch (61) beinhaltet,
das untere Rohr (FL2) ein Strahlrohr (80) und einen zweiten Gummischlauch (90) beinhaltet, die miteinander unter Benutzung eines Verbinders (95) verbunden sind,
ein Ende des Stahlrohrs (80) des unteren Rohrs (FL2) mit der Hydraulikeinheit (70) verbunden ist,
ein Ende des zweiten Gummischlauchs (90) des unteren Rohrs (FL2) mit dem Bremssattel (1C) verbunden ist,
der Verbinder (95) zumindest teilweise an einer Position weiter abwärts als eine Mitte des Scheinwerfers (40) in einer Fahrzeug-oben-und-unten-Richtung (V) gelegen ist, und
der zweite Gummischlauch (90) mit dem Verbinder (95) an einer Position weiter abwärts als die Hydraulikeinheit (70) verbunden ist.

2. Das gespreizte Fahrzeug nach Anspruch 1, wobei
der Verbinder (95) angeordnet ist, um sich parallel mit einer Mittelachse (10a) des Kopfrohrs (10) zu erstrecken.

3. Das gespreizte Fahrzeug nach Anspruch 1 oder 2, wobei
eine vertikale Ebene (vs), die durch eine Mitte des Fahrzeugs (100) in einer Fahrzeug-links-und-rechts-Richtung (H) verläuft, definiert ist, und ein erster Raum und ein zweiter Raum, die durch die vertikale Ebene (vs) geteilt sind, definiert sind,
der Bremssattel (1C) in dem ersten Raum und an einer Position beabstandet von der vertikalen Ebene (vs) in der Vorderansicht des Fahrzeugs (100) angeordnet ist, und
der Verbinder (95) in dem ersten Raum angeordnet ist.

4. Das gespreizte Fahrzeug nach Anspruch 3, wobei
der Verbinder (95) an einer Position weiter aufwärts als die Hydraulikeinheit (70) angeordnet ist, und
die Hydraulikeinheit (70) so angeordnet ist, dass eine Mitte der Hydraulikeinheit (70) in der Fahrzeug-links-und-rechts-Richtung (H) in dem zweiten Raum gelegen ist.

5. Das gespreizte Fahrzeug nach irgendeinem von Ansprüchen 1 bis 4, wobei
das Stahlrohr (80) beinhaltet
einen ersten Abschnitt (81), der sich von der Hydraulikeinheit (70) zu einer Position weiter aufwärts als eine Mitte des Scheinwerfers (40) in der Fahrzeug-oben-und-unten-Richtung (V) in der Vorderansicht des Fahrzeugs (100) erstreckt,
einen zweiten Abschnitt (82), der sich von einer Position weiter aufwärts als die Mitte des Scheinwerfers (40) in der Fahrzeug-oben-und-unten-Richtung (V) zu einer Position weiter abwärts als die Mitte des Scheinwerfers (40) in der Fahrzeug-oben-und-unten-Richtung (V) in der Vorderansicht des Fahrzeugs (100) erstreckt, und
einen dritten Abschnitt (83), der ein oberes Ende des ersten Abschnitts (81) mit einem oberen Ende des zweiten Abschnitts (82) an einer Position weiter aufwärts als die Mitte des Scheinwerfers (40) in der Fahrzeug-oben-und-unten-Richtung (V) verbindet,
der Verbinder (95) mit einem unteren Ende des zweiten Abschnitts (82) verbunden ist, und
die ersten, zweiten und dritten Abschnitte (81, 82, 83) des Stahlrohrs (80) zumindest teilweise mit dem Scheinwerfer (40) in der Vorderansicht des Fahrzeugs (100) überlappen.

6. Das gespreizte Fahrzeug nach irgendeinem von Ansprüchen 1 bis 5, wobei
die vordere Abdeckung (30) weiterhin einen hinteren Oberflächenabschnitt (35), der hinter dem Kopfrohr (10) in der Fahrzeug-vorne-und-hinten-Richtung (L) angeordnet ist, aufweist,
sich eine vordere Kante des vorderen Oberflächenabschnitts (31) in der Seitenansicht des Fahrzeugs (100) entlang einer ersten virtuellen Linie (VL1), die parallel mit einer Mittelachse (10a) des Kopfrohrs (10) in der Seitenansicht des Fahrzeugs (100) an einem Raum vor den Kopfrohr (10) liegt, erstreckt, und sich eine hintere Kante des hinteren Oberflächenabschnitts (35) in der Seitenansicht des Fahrzeugs (100) entlang einer zweiten virtuellen Linie (VL2), die parallel mit der Mittelachse (10a) des Kopfrohrs (10) in der Seitenansicht des Fahrzeugs (100) an einem Raum hinter dem Kopfrohr (10) liegt, erstreckt.

## Revendications

1. Véhicule à selle comprenant :
un tube de fourche (10),
une fourche avant (20) disposée pour pouvoir tourner au niveau du tube de fourche (10),
un guidon (17) configuré pour être tourné en même temps que la fourche avant (20),
un maître cylindre (18) fixé au guidon (17),
un étrier (1C) disposé au niveau de la fourche avant (20),
un capot avant (30) qui comporte une surface avant (31) agencée vers l'avant du tube de fourche (10) dans la direction avant arrière du véhicule (L),
un bloc optique (40) qui comporte une surface d'émission de lumière (30) exposée depuis la surface avant (31), et qui est agencé entre le tube de fourche (10) et la surface avant (31) dans une vue latérale du véhicule (100), et
une unité hydraulique (70) agencée entre le tube de fourche (10) et la surface avant (31) dans la vue latérale du véhicule (100), où
l'unité hydraulique (70) est située à une position plus loin vers le bas que le bloc optique (40) et plus loin vers le haut qu'un support inférieur (22) de la fourche avant (20),
l'unité hydraulique (70) chevauche au moins partiellement le bloc optique (40) dans une vue en plan du véhicule (100),
l'unité hydraulique (70) chevauche au moins partiellement le tube de fourche (10) dans une vue avant du véhicule (100),
le maître cylindre (18) et l'unité hydraulique (70) sont reliés l'un à l'autre par l'intermédiaire d'un tube supérieur (FL1), et l'unité hydraulique (70) et l'étrier (1C) sont reliés l'un à l'autre par l'intermédiaire d'un tube inférieur (FL2),
le tube supérieur (FL1) inclut un premier tuyau de caoutchouc (61),
le tube inférieur (FL2) inclut un tube d'acier (80) et un second tuyau de caoutchouc (90) reliés l'un à l'autre grâce à l'utilisation d'un dispositif de raccordement (95),
une extrémité du tube d'acier (80) du tube inférieur (FL2) est reliée à l'unité hydraulique (70),
une extrémité du second tuyau de caoutchouc (90) du tube inférieur (FL2) est reliée à l'étrier (1C),
le dispositif de raccordement (95) est au moins partiellement situé au niveau d'une position plus loin vers le bas que le centre du bloc optique (40) dans la direction haut bas (V) du véhicule, et
le second tuyau de caoutchouc (90) est relié au dispositif de raccordement (95) au niveau d'une position plus loin vers le haut que l'unité hydraulique (70).

2. Véhicule à selle selon la revendication 1, dans lequel :
le dispositif de raccordement (95) est agencé pour s'étendre parallèlement à l'axe central (10a) du tube de fourche (10).

3. Véhicule à selle selon la revendication 1 ou la revendication 2, dans lequel :
un plan vertical (vs) est défini, passant par le centre du véhicule (100) dans la direction gauche droite (H) du véhicule, et un premier espace ainsi qu'un second espace coupés par le plan vertical (vs) sont définis,
l'étrier (1C) est agencé dans le premier espace et à une position écartée du plan vertical (vs) dans la vue avant du véhicule (100), et
le dispositif de raccordement (95) est agencé dans le premier espace.

4. Véhicule à selle selon la revendication 3, dans lequel :
le dispositif de raccordement (95) est agencé à une position plus loin vers le haut que l'unité hydraulique (70), et
l'unité hydraulique (70) est agencée de sorte à ce que le centre de l'unité hydraulique (70) dans la direction gauche droite (H) du véhicule soit situé dans le second espace.

5. Véhicule à selle selon l'une quelconque des revendications 1 à 4, dans lequel :
le tube d'acier (80) inclut :
une première partie (81) qui s'étend depuis l'unité hydraulique (70) jusqu'à une position plus éloignée vers le haut que le centre du bloc optique (40) dans la direction haut bas (V) du véhicule dans la vue avant du véhicule (100),
une deuxième partie (82) qui s'étend depuis une position plus éloignée vers le haut que le centre du bloc optique (40) dans la direction haut bas (V) du véhicule jusqu'à une position plus éloignée vers le bas que le centre du bloc optique (40) dans la direction haut bas (V) du véhicule dans la vue avant du véhicule (100), et
une troisième partie (83) qui relie l'extrémité supérieure de la première partie (81) à l'extrémité supérieure de la deuxième partie (82) à une position située plus loin vers le haut que le centre du bloc optique (40) dans la direction haut bas (V) du véhicule,
le dispositif de raccordement (95) est relié à l'extrémité inférieure de la deuxième partie (82), et
les première, deuxième et troisième parties (81, 82, 83) du tube d'acier (80) chevauchent au moins partiellement le bloc optique (40) dans la vue avant du véhicule (100).

6. Véhicule à selle selon l'une quelconque des revendications 1 à 5, dans lequel :
le capot avant (30) comporte en outre une surface arrière (35) disposée vers l'arrière du tube de fourche (10) dans la direction avant arrière du véhicule (L),
le bord avant de la surface avant (31) dans la vue latérale du véhicule (100) s'étend le long d'une première droite virtuelle (VL1) qui est parallèle à l'axe central (10a) du tube de fourche (10) dans la vue latérale du véhicule (100) au niveau d'un espace situé à l'avant du tube de fourche (10), et
le bord arrière de la surface arrière (35) dans la vue latérale du véhicule (100) s'étend le long d'une seconde droite virtuelle (VL2) qui est parallèle à l'axe central (10a) du tube de fourche (10) dans la vue latérale du véhicule (100) au niveau d'un espace situé à l'arrière du tube de fourche (10).
